# EUROPÄISCHE PATENTANMELDUNG

(11) **EP 3 770 769 A1**
(43) Veröffentlichungstag der Anmeldung: **27.01.2021**
(21) Anmeldenummer: 19187858.6
(22) Anmeldetag: 23.07.2019
(51) Int. Cl.: G06F 16/245

(54) **VERFAHREN ZUR ABFRAGE ODER BEARBEITUNG EINER VOLLSTÄNDIGEN DATEI MITTELS EINER QUERY LANGUAGE UND VORRICHTUNG ZUR VERWALTUNG DES VERFAHRENS**

(71) Anmelder: Siemens Aktiengesellschaft, 80333 München (DE)
(72) Erfinder: Eckl, Roland, 91301 Forchheim (DE)

(57) **Zusammenfassung**

Es wird eine neuartige und vorteilhafte Kombination einer Datenschnittstelle (API Endpoint) und eines dedizierten File-Endpoints mit gemeinsamem Ticket-System vorgestellt. Quasiatomare Aktionen werden dabei durch Verwendung von je (mindestens) einem neu eingeführten Ticket ermöglicht, welches die beiden Endpoints miteinander verknüpft. Dateien sind dabei über typ-spezifische FileProxies als Teil des Datenmodells adressierbar, wobei die jeweiligen FileProxies die typ-spezifische Handhabung (Lesen, Schreiben, Ändern, Löschen) implementieren.

## Beschreibung

Eine Abfragesprache (auch *Anfragesprache,* Retrievalsprache, Suchsprache, Suchanfragesprache, Filtersprache, Query Language), ist allgemein eine Sprache zur Suche nach Informationen.
Das Ergebnis einer Abfrage (*Query*) ist eine Teilmenge des zugrundeliegenden Informationsbestandes.

Es zählen etwa klassische Sprachen wie SQL (Structured Query Language) als typische Abfragesprache für Datenbanken, typische Sprachen aus der Data Analytic (Sparql, Gremlin, ...) aber auch moderne Vertreter wie etwa GraphQL im Web-Umfeld. Eine Query wird dabei gegen ein Typ-Modell bzw. Schema abgesetzt. Dies kann z. B. ein Datenbankschema sein, welches eine oder idealerweise mehrere Tabellen mit bestimmten Feldern definiert, oder ein Typ-Modell für Objekte mit Eigenschaften (Properties). In beiden Fällen sind Relationen zwischen Tabellen bzw. Objekten möglich und meist vorhanden.

Trotz der Bezeichnung "Query" erlauben solche Sprachen nicht nur die reine Abfrage, sondern auch das Manipulieren (Erzeugen, Verändern, Löschen) von Daten. Der Sprachumfang bzw. die darüber realisierten Funktionalitäten folgen dabei meist dem CRUD-Prinzip (Create, Read, Update, Delete). Nichts desto trotz wird nachfolgend unabhängig von der konkreten Funktion stets von einer Anfrage (Request) und einer zugehörigen Antwort (Response) gesprochen.
Eine Anfrage wird dabei i. d. R. vollständig übertragen und dann durch einen oder mehrere "Resolver" aufgelöst und in die Antwort überführt.

Über Web APIs (Application Programming Interface, z. B gegenüber einem Web-Server, vergleiche auch https://en.wikipedia.org/wiki/Web_API), welche sich üblicherweise Server-seitig implementiert sind und von der Client-Seite einer Anwendung aufgerufen werden, können Anfragen gestellt werden, welche Antworten generieren (Request/Response). Auch hier wird häufig direkt mit Daten interagiert. In der nachfolgenden Betrachtung sollen dabei insbesondere solche daten-zentrischen APIs betrachtet werden, weniger ressourcen-zentrische die dem klassischen REST-Paradigma folgen (Representational State Transfer). Dies schließt insbesondere auch RPC (Remote Procedure Calls) mit ein, viele Queries bzw. Graphen-Abfragen stellen im Grunde standardisierte Abfragen über RPC dar.

Ein Beispiel für ein Verfahren zur Bereitstellung von Funktionen, insbesondere auch die Abfrage von Informationen, innerhalb eines industriellen Automatisierungssystem über eine Webanwendung findet sich in der EP 3,438,774 A1.

Wenn nachfolgend von Query Language (QL) die Rede ist, schließt dies (Web) APIs mit vergleichbaren Eigenschaften stets ein.
Abfragesprachen und APIs eignen sich meist für einfache bis hin zu komplexen Anfragen gegen Daten(-Sätzen); jedoch weniger bis gar nicht für ganze Dateien. Dateien auf dieselbe Art und Weise wie gewöhnliche Daten zu behandeln (also etwa den Inhalt einer Datei als Wert einer Variablen) ist hier aus diversen Gründen nachteilig:
Eine Datei ist für gewöhnlich keine Abfrageeigenschaft, da ja kein Datensatz gesucht wird, welcher von der Gleichheit mit einer als Parameter übergebenen Datei abhängt.

Eine Datei ist kein guter Bestandteil einer Antwort, da die Antworten bei Query-Languages (und auch daten-zentrischen APIs) i. d. R. einem Format folgen welches auswertbar ist und kein einzelnes Roh-Datum darstellt. Insbesondere eine Abfrage, dessen Antwort mehr als einen Treffer liefert, erlaubt keine sinnvolle Ausgabe mehrerer "plain files", sondern diese müssen als Payload in eine übergeordnete Struktur verpackt und ggf. auch gesondert markiert ("escaped", u. B. BASE64 kodiert) werden. Beides führt zusätzlich zu mehr Traffic beim Netzwerktransport.

Die Größe der Datei(en) ist häufig vorab unbekannt. Die Übertragung der Antwort könnte unerwartet lange dauern oder der Client hat nicht ausreichend Ressourcen oder Interesse ab einem bestimmten Schwellwert überhaupt alle Dateien zu erhalten.

Eine Datei ist kein guter Bestandteil einer Mutation (Create, Update), da die Anfrage dadurch sehr groß wird. Es muss bei den meisten Query Languages allerdings zuerst die komplette Anfrage übertragen worden sein, um überhaupt mit ihrer Auflösung ("Resolve") beginnen zu können. Somit würden eine oder mehrere Dateien als Teil der Mutation übertragen, um ggf. daraufhin nur festzustellen, dass z. B. die Rechte des Nutzers nicht ausreichen oder die Anfrage sonstige Randbedingungen nicht erfüllt. Der Upload würde also als Teil der sehr lange andauernden Anfrage erfolgen aber zu keiner Persistenz (Bereithaltung der Daten über einen längeren Zeitraum) auf der Serverseite führen.

Das auswertende System muss einen ausreichend großen Arbeitsspeicher (oder temporären Zwischenspeicher) aufweisen, um die gesamte Query mit der oder den enthaltenen Dateien entgegenzunehmen und zwischenzuspeichern.
Da die Anfrage als Ganzes gesehen werden muss, ist das Streamen der Datei(en) an den Ablageort als Bestandteil der Anfrage ebenfalls nicht möglich. Hierzu müssten Dateien als Bestandteil der Query on-the-fly erkennbar/extrahierbar sein und ggf. direkt an den Zielort (z. B. Datenträger, unterlagtertes System für Dateiablage, etc.) weiter gestreamt werden. Ebenso wäre hier insbesondere keine unterschiedliche Zielablage für Dateien möglich (etwa auf die SD-Karten,
internen Speicher, Datenstrukturen), da dies erst durch den Resolve-Schritt aufgelöst werden könnte.

In beide Richtungen (lesen, schreiben) gilt: Es ist zum Zeitpunkt der Anfrage bzw. Antwort stets unklar, ob die Gegenstelle die ganzen Daten aufnehmen kann oder will. Ebenso ist es je nach Dateigröße vorab schwer einzuschätzen, welche Up-/Download-Strategie am geeignetsten wäre (etwa paralleler Download von Einzeldateien, sequentielles Laden in einer offenen Verbindung, sequentielles Laden in individuellen Einzelverbindungen, etc.).

Aus diesem Grund werden Dateien für gewöhnlich auch gar nicht über Query Languages behandelt, höchstens indirekt als abfragbare Eigenschaft welche z. B. einen Pfad auf eine existierende Datei darstellt auf den sowohl der Client (Anfrage-Steller) als auch Server (Antwort-Bearbeiter) Zugriff haben. Das tatsächliche File-Handlung selbst wird dabei nicht betrachtet. Es werden also durch die Query selbst für gewöhnlich keine neuen Dateien erzeugt, gelöscht oder ausgegeben. Es handelt sich in diesem Fall eher um zwei unabhängig voneinander benutzbare Systeme die idealerweise synchronisiert werden.
Eine Anfrage führt aber nicht zu einem Upload einer Datei und sperrt für die Zwischenzeit etwa weitere Uploads oder Lesezugriff. Die Interaktion erfolgt somit tatsächlich über zwei unabhängige Systeme und kann nicht als "atomare Aktion" betrachtet werden.

Ebenso ist es bei Query-Languages nicht per se möglich dynamische Dateien zu repräsentieren (etwa eine Query mit bestimmten Kriterien für die ein bestimmtes Datei-Abbild erst bei Bedarf erzeugt und serialisiert werden soll - etwa eine Backup-Datei, ein Zustandsabbild, ein Export von Traces bestimmter Subsysteme, usw.).

Doch genau hier liegt das Problem: Query Languages oder datenzentrische APIs haben viele Vorteile um flexibel mit Daten zu hantieren, berücksichtigen jedoch kein File Handling.

Dennoch sind gerade im industriellen Umfeld auch viele Dateien vorhanden und mit Daten (und Modellen) verknüpft (Traces, Logs, Firmware-Images, ...). Ziel ist es also die Vorteile von Query Languages zu erhalten und zugleich darüber ein einfaches und umfangreiches File-Handling zu ermöglichen.

Generell lässt sich die Problemstellung auf sämtliche APIs an Systemgrenzen übertragen, auch wenn der Fokus in der Beschreibung auf Query Languages und APIs im Web-Umfeld liegt, welche aus Browsern heraus konsumierbar sind und somit etwa auf das HTTP-Protokoll setzen welches diversen RFC entnehmbar ist, (die aktuelle Version RFC7540 von 2015, aber nicht darauf beschränkt).

Wie weiter oben beschrieben, werden Daten und Dateien (Ressourcen) heute in Query Languages bzw. datenzentrischen APIs getrennt voneinander betrachtet.
Alternativ werden eher ressourcen-basierte APIs (vgl. REST APIs) verwendet. Insbesondere REST verlagert aber viel Komplexität in den Client und führt bei komplexeren Anfragen meist auch zu vielen Einzelanfragen. So könnte man etwa über ODATA (http://www.odata.org/) Abfragen realisieren, der Dateizugriff wäre dabei ebenfalls über denselben oder einen anderen Endpunkt möglich. Dennoch müssten Dateigrößen für jede einzelne Datei vorab per HTTP HEAD abfragt werden und Manipulation (Create, Write, Delete) wäre nicht als quasi atomare Aktion möglich. (Auch hier je Datei eine Einzel-Aktion ohne Bezug zu einer ODATA-Anfrage - ein Datum ist somit nicht hart an eine Datei gekoppelt.)

Es ist daher Aufgabe der Erfindung, eine Möglichkeit anzugeben, welche die Anwendung von APIs und Abfragen sowie Manipulationen auf Dateien als Ganzes zu ermöglichen.

Die Aufgabe wird gelöst durch ein Verfahren mit den Merkmalen gemäß dem Patentanspruch 1.
Die Aufgabe wird weiterhin gelöst durch eine Vorrichtung umfassend die Merkmale des Patentanspruchs 14.

Das erfindungsgemäße Verfahren ermöglicht die Abfrage oder Bearbeitung einer vollständigen Datei mittels einer Query Language über eine Schnittstelle, wobei die Datei in einem Informations-Modell als Objekt adressiert ist, mit den folgenden Schritten:
- eine von einem Client eingegangene Anfrage zu einer Datei wird auf Ausführbarkeit geprüft,
- ein Ticket wird erzeugt, das Informationen zur Abfrage und zu der Datei enthält,
- Ticketinformationen werden über den anfragenden Client an den geplanten Empfänger der Abfrage übermittelt,
- anhand der im Ticket enthaltenen Informationen kann die vollständige Datei vom Empfänger geladen oder bearbeitet werden.
Die fragliche Datei kann dabei auch nur einen Teil der tatsächlich durchgeführten Abfrage darstellen.

Die erfindungsgemäße Vorrichtung zur Durchführung eines Verfahrens für die Abfrage oder Bearbeitung einer vollständigen Datei mittels einer Query Language über eine Schnittstelle, wobei die Datei in einem Informations-Modell als Objekt adressiert ist, die sowohl von Client als auch Empfänger der Datei ansprechbar ist und die nach Prüfung auf Ausführbarkeit einer von einem Client eingegangene Anfrage zu einer Datei - ein Ticket erzeugt, das Informationen zur Abfrage und zu der Datei enthält, und das Ticket mit den Informationen über den anfragenden Client an den geplanten Empfänger der Abfrage übermittelt, der Empfänger anhand der empfangenen im Ticket enthaltenen Informationen die vollständige Datei laden oder bearbeiten kann.

Es wird eine neuartige und vorteilhafte Kombination einer Datenschnittstelle (API Endpoint) und eines dedizierten File-Endpoints mit gemeinsamem Ticket-System vorgestellt. Quasi-atomare Aktionen werden dabei durch Verwendung von je (mindestens) einem neu eingeführten Ticket ermöglicht, welches die beiden Endpoints miteinander verknüpft. Dateien sind dabei über typ-spezifische FileProxies als Teil des Datenmodells adressierbar, wobei die jeweiligen FileProxies die typspezifische Handhabung (Lesen, Schreiben, Ändern, Löschen) implementieren.

Vom Stand der Technik der Web-API sind bereits eine Schnittstelle oder auch dedizierter API-Endpoint für Anfragen / Queries bzw. API-Aufrufe und ein dedizierter File-Endpoint, der auf dem gleichen physikalischen Gerät liegen kann (aber nicht muss), bekannt. Diese Endpunkte stehen jedoch nicht in mittelbarem Zusammenhang, sondern arbeiten unabhängig voneinander.

Ein Informations-Modell (bzw. Daten-Modell), erlaubt es, mit Daten zu interagieren. Vorzugsweise weist das Modell eine Graphenstruktur auf. Durch diese Graphenstruktur wird die Anfrage erleichtert, es können so Daten, die miteinander verknüpft sind, beispielsweise in einer Baumstruktur, mittels einer Abfrage ermittelt werden, wo sonst mehrere Abfragen erforderlich wären (siehe beispielsweise auch OPC UA) Dateien sind als eigenständige Objekte (so genannte File Proxys) in diesem Modell enthalten, welche in Relation zu weiteren Objekte stehen. Ein Objekt repräsentiert beispielsweise einen Diagnose-Puffer und ein weiteres einen Dump aller Diagnose-Daten als File.
Diese FileProxy-Objekte dienen zum einen der Darstellung im Informationsmodell (um Informationen abzufragen oder Aktionen anzufragen), aber auch einer Implementierung jeweils typspezifischer Behandlung von Dateien (z. B. Schreiben einer Firmware, Persistieren großer Blobs - Binary Large Objects - in eine Datenbank, Ablegen individueller Dateien auf einer SD-Karte oder einem Filesystem, usw.)

Ein wesentlicher Aspekt der Erfindung ist ein neuartiges Ticket-System, welches jeweils ein Ticket für Aktionen auf dem Informationsmodell erstellt, die einen Bezug zu einer Datei haben.

Dieses System überwacht auch den Lebenszyklus solcher an ein Ticket gebundener Aktionen wie etwa die maximale Dauer einer Gesamtaktion. Dabei wird über die Schnittstelle API-Endpoint auf das Informationsmodell zugegriffen, der vorzugsweise (aber nicht zwingend) auf einem Webserver bereitgestellt wird.
Dateien werden über Objekte, sogenannte "FileProxies", repräsentiert, welche als Kindelemente anderer Elemente erzeugt, manipuliert oder ausgelesen werden. Die Interaktion mit diesen Proxies maskiert die tatsächliche File-Interaktion - es werden Rahmenbedinungen geprüft, Auskunft zur zugehörigen Datei geliefert, usw. Sämtliche dem CRUD-Prinzip folgenden Aktionen (Create, Read, Update, Delete / Erzeugen, Lesen, Schreiben/Ändern, Löschen) werden dadurch auf Ausführungsmöglichkeit geprüft ("Preview"-Phase) und sofort (Löschen) oder nachgelagert (alle anderen) über das File API über den jeweiligen Proxy ausgeführt ("Resolve"-Phase).

Das Löschen eines Proxies über die Web API entfernt automatisch auch sein physikalisches Gegenstück, welches es repräsentiert. Erzeugen, Schreiben und Lesen von Dateien hingegen erzeugt ein Ticket im Ticket Manager und versetzt den Proxy in einen Zustand, welcher widerspiegelt, dass noch eine File-Interaktion über das File API aussteht.
Der Nutzer bekommt als Teil der Daten-Interaktion den Zustand und Zusatzinformationen durch Übertragung der Eigenschaften des FileProxies als Teil der Antwort. Diese decken beim Erzeugen/Ändern Rahmenbedingungen ab, beispielswese "Upload maximal 20 Mb", bzw. bei gewünschten Lesevorgängen die Metainformationen zur jeweiligen Datei (etwa "Datei ist 5 Mb groß") .
Hier ist auch das jeweilige Ticket enthalten, welches mindestens durch eine eindeutige ID dargestellt wird. Darüber hinaus können Informationen zur Lebensdauer des Tickets enthalten sein.

Ein Ticket ist vorzugsweise an eine User Session gebunden. Nur wer das Ticket initiiert hat sollte dieses am File API verwenden können. Der Ticket Manager verwaltet hierfür neben den Tickets, und deren Referenz zum zuständigen FileProxy, die Lebensdauer und die Zugehörigkeit zu einer User Session. Die Metainformationen und Rahmenbedingungen müssen dabei so lange stabil bleiben wie Tickets für die Aktion noch offen sind. Dies bedeutet ein File (oder dessen Form in Firmware, Filesystem, usw.) und dessen FileProxy im Informationsmodell darf nicht verändert werden so lange Tickets für Lese-Aktionen hierfür ausstehend sind.
Lese-Aktionen auf derselben Datei können aber parallel stattfinden.
Eine Schreib- oder Lösch-Aktion ist hingegen nur möglich, wenn derzeit keinerlei Tickets für das File und dessen Proxy offen sind.

Ein separater File-Endpoint bildet typischerweise eine REST-Schnittstelle auf einem Webserver aus, denkbar wären aber auch andere Lösungen, beispielsweise ein RPC Call. Der File-Endpoint erlaubt Aktionen über HTTP Methoden, etwa GET zum Lesen und POST zu schreiben und führt die Ticket-ID vorzugsweise im Pfad der HTTP-Anfrage.

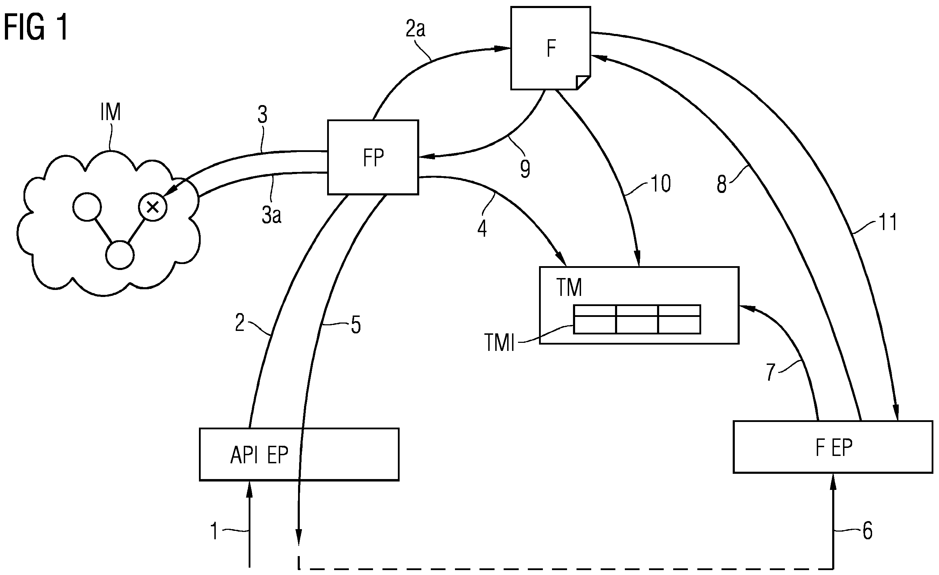

Im Folgenden wird das bevorzuge Ausführungsbeispiel in der einzigen Figur als Ablaufdiagramm des erfindungsgemäßen Verfahrens dargestellt.
Dabei ist festzustellen, dass das Ausführungsbeispiel nicht einschränkend gemeint ist.

Das Ticket wird vom Endpoint (API Endpoint) über den Ticket Manager (TM) auf Gültigkeit geprüft. Ist das Ticket gültig, wird die gewünschte Aktion über den zugehörigen FileProxy ausgeführt ("Resolve"-Phase) und bei erfolgreicher Ausführung letztlich positiv beantwortet. Im Negativfall wird ein entsprechender Fehler-Code im Header zurückgegeben.
- Ein HTTP-POST enthält (ausschließlich) die Datei im Request Body und liefert eine Antwort ohne Body. Der POST würde für Erzeugen und Schreiben verwendet.
   ▪ Ein HTTP-GET enthält keinen Request Body, sondern liefert (ausschließlich) die Datei im Response Body. Der GET würde für das lesen verwendet.
   ▪ Ein HTTP-DELETE enthält weder einen Request- noch einen Response-Body. Das DELETE wird für das Zurückgeben eines Tickets verwendet. (Nicht für das Löschen einer Datei.) Im zuvor genannten "Resolve"-Schritt wird dabei die Datei geschrieben oder gelesen - wobei der Payload der HTTP-Anfrage direkt an die Zielstelle (Flashspeicher, Dateisystem, Datenbank, ...) weitergereicht werden kann wie die Daten am File-Endpoint eintreffen. Es muss also nicht zwingend die ganze Datei zuerst vollständig empfangen werden, sondern das Puffern oder direkte Weiterleiten kann typ-spezifisch vom FileProxy behandelt werden.

Nach erfolgreicher Ausführung wechselt der FileProxy in einen allgemeinen Default-Zustand (z. B. "verfügbar"). Wurde eine Aktion initiiert (z.B. Schreiben einer Datei), diese soll aber nicht ausgeführt werden (etwa weil die Datei größer wäre als der in der Antwort angegebene erlaubte Maximalwert für den Upload), so kann das Ticket über die HTTP-Methode DELETE gelöscht werden. Der FileProxy wird dabei wieder in den ursprünglichen Zustand versetzt (oder entfernt, wenn das Objekt erst erzeugt werden sollte, um eine "Waisenbehandlung" durchzuführen und keine verwaisten Objekte im Informationsmodell zu hinterlassen.) Das Ticket könnte auch automatisch entfernt werden, wenn schlichtweg über eine definierte Dauer keine Aktion mit dem Ticket gegen das File API initiiert wird.

Nachfolgend ist der beispielhafte Ablauf einer quasi-atomaren Aktion dargestellt:
Über den Daten-Endpunkt (API-Endpoint) soll eine Datei angezeigt werden. Dabei werden die Befehle in einer Art "Pseudocode" beschrieben, http Code ist kursiv geschrieben.
(1) Initial stellt ein Client eine Anfrage mit einer Query welche letztlich dazu führen soll eine Datei zu erzeugen.
   > Create file (x)
(2) Dabei wird über das Informations-Modell (IM) ein Objekt adressiert (x), an welchem die Datei modelliert ist. Die Datei wird dabei durch einen FileProxy (FP) repräsentiert, welcher eine initiale Prüfung vornimmt, ob die Aktion bei den aktuellen Randbedingungen möglich ist.
   Der FileProxy (FP) ist initial im Status "pending".
   > Create FileProxy
   > Check if File can be added to X
   > Check environment (user, available space, system state, etc.)
(3) Im Positivfall wird der Proxy dem Modell hinzugefügt.
   > Add FileProxy to IM (Information Model),
   > Set state = "pending"
(4) Es wird ein Ticket erzeugt, welches auf den FileProxy (FP) verweist und im Ticket-Manager (TM) hinterlegt wird.
   > Create Ticket,
   > Link Ticket to FileProxy
(5) Das Ticket wird als Teil der Antwort an den Client zurückgemeldet. Der Repräsentant der Datei enthält dabei auch Informationen darüber, wie lange das Ticket gültig ist und welche Rahmenbedingungen zu beachten sind (etwa maximale Dateigröße).
   > Return FileProxy Object with Ticket "AFFEAFFE" and Conditions (max. Size, max. Time valid, ...)
(6) In einem weiteren Schritt initiiert der Client ein HTTP POST an den File-Endpoint unter Verwendung des Tickets (vorzugsweise als Bestandteil der URL).
   *> POST* /*file*/*AFFEAFFE http*/*1.1*
   > Upload File
(7) Der Endpunkt prüft das Ticket auf Gültigkeit und die Verfügbarkeit des damit verknüpften File Proxys.
   > Check Ticket
   > Get FileProxy
(8) Über den Proxy wird die Datei letztlich persistiert - je nach Proxy-Typ und Anforderungen entweder am Stück, in mehreren Teilen oder gestreamt.
   > Persist through Resolver
(9) Ist der Datentransfer abgeschlossen, wird der Status am Proxy im Informations-Modell in den Zustand "verfügbar" gesetzt.
   > Set state = "available"
(10) Das Ticket wird aufgelöst (im Sinne von: entfernt).
   > Fulfil ticket "AFFEAFFE"
(11) Über den entsprechenden HTTP-Statuscode wird dem Client signalisiert, dass die Aktion erfolgreich abgeschlossen wurde.
   *> HTTP 200 OK*
   > Acknowledge Upload

### Negativfall (in der Figur nicht dargestellt)

### Delete - Ticket wird gelöscht

### Timeout - Ticket wird gelöscht

Gegebenenfalls wird ein Fehlercode zurückgemeldet.

Eine Ticket ID kann in einer weiteren vorteilhaften Ausführungsform der Erfindung bestimmte Variablen encodieren, die es erlauben den Zeitpunkt der Ausstellung und die Reihenfolge der Tickets zu rekonstruieren. Somit lässt sich gegebenenfalls bestimmen, ob ein nicht-verfügbares Ticket zumindest der Wahrscheinlichkeit nach zuvor existiert haben könnte.

Diese 16 Byte könnten 32-Zeichen Zeichenfolge in HEX-Darstellung beispielsweise das Ticket ergeben:
[4 Bytes = DateTime][8 Bytes = Random Ticket][4 B. = Counter]

Um eine manipulationssichere Lösung zu erhalten, kann vorteilhaftereweise mindestens ein Teil der Ticket ID zufällig gewählt werden (Random). Wird ein symmetrischer BlockCipher eingesetzt (z. B. Feistel für reversibles Hashing) sind die hineinkodierten Variablen nicht mehr so einfach erkennbar; aber selbst wenn diese Begleit-Variablen manipuliert würden, muss es serverseitig im Ticket Manager immer die gesamte Entsprechung geben und das Ticket für die jeweilige User Session gültig sein. Eine solche Zusatzkodierung in der Ticket-ID erlaubt also ggf. bessere Fehler-Antworten geben zu können, ohne die Sicherheit zu beeinträchtigen.

In einem konkreten Ausführungsbeispiel ist die vorgeschlagene Lösung insbesondere für speicherprogrammierbare Steuerungen (Programmable Logic Controller, PLC) mit einer web-basierten Datenschnittstelle anwendbar.

Die erfindungsgemäße Lösung bietet einige Vorteile gegenüber der bisherigen Vorgehensweise. Aktionen bestehend aus einer Anfrage und einer zugehörigen Datei-Behandlung können als quasi-atomare Aktionen implementiert werden.

Dadurch, dass Up- and Downloads über Verbindungen laufen außerhalb der üblichen Request / Response Kommunikation der Queries ("out-of-bound") wird eine bessere Parallelisierung erlaubt.

Große Datenmengen als Teil einer Anfrage ("Upload") können vermieden werden, insbesondere wenn die tatsächliche Aktualisierung/Erzeugung der Datei bei den mitgegebenen Parametern gar nicht möglich ist. Die Reihenfolge der Parameter ist u.U. nicht immer dergestalt, dass die Datei(en) erst zum Schluss kommen müssen.

Ebenso wäre ein Abbruch der gesamten Mutation um einen Upload zu verhindern bei Batch-Requests kontraproduktiv. Der reine Abbruch würde auch keine detaillierte Information bzgl. "weshalb nicht möglich" liefern → hierfür ist die jeweilige Serialisierung des FileProxys aussagekräftiger.

Ein weiterer Vorteil der Erfindung ist, dass Flexible Quota bzgl. paralleler Datei-Interaktionen ermöglicht wird, ggf. mit unterschiedlichen Quota je nachdem zu welchem Daten-Objekt eine Datei gehört. Ein Firmware-Transfer stets exklusiv über alle User hinweg, Data-Logs bis zu X pro User und total parallel, etc.)
Da für jedes Ticket die dahinterliegende Aktion und Bestimmung (z.B. Firmware in Flash schreiben) bekannt ist, kann individuell der Transfer der Datei behandelt werden.

## Patentansprüche

1. Verfahren zur Abfrage oder Bearbeitung einer vollständigen Datei (F) mittels einer Query Language über eine Schnittstelle (API), wobei die Datei in einem Informations-Modell (IM) als Objekt (FP) adressiert ist,
mit folgenden Schritten:
- eine von einem Client eingegangene Anfrage (1) zu einer Datei (F) wird auf Ausführbarkeit geprüft,
- ein Ticket wird erzeugt (4), das Informationen zur Abfrage und zu der Datei enthält,
- Ticketinformationen werden über den anfragenden Client an den geplanten Empfänger der Abfrage übermittelt (5),
- anhand der im Ticket enthaltenen Informationen kann die vollständige Datei vom Empfänger geladen oder bearbeitet werden (8).

2. Verfahren gemäß dem Patentanspruch 1,
**dadurch gekennzeichnet, dass**
das Bearbeiten einer Datei auch das Neuanlegen der Datei umfasst.

3. Verfahren gemäß einem der vorherigen Patentansprüche,
**dadurch gekennzeichnet, dass**
das Informations-Modell (IM) eine Graphenstruktur aufweist, welche Relationen der Daten und Dateien untereinander darstellt.

4. Verfahren gemäß Patentanspruch 3,
**dadurch gekennzeichnet, dass**
typ-spezifische FileProxies (FP) als Teil des Datenmodells adressierbar sind, wobei die jeweiligen FileProxies (FP) die typspezifische Handhabung, insbesondere Lesen, Schreiben, Ändern und Löschen, implementieren ermöglichen.

5. Verfahren gemäß Patentanspruch 4,
**dadurch gekennzeichnet, dass**
ein FileProxy (FP) zumindest eine Information bezüglich des File-Proxy Zustands enthält.

6. Verfahren gemäß einem der vorherigen Patentansprüche,
**dadurch gekennzeichnet, dass**
das Ticket oder der FileProxy (FP) eine Information über Rahmenbedingungen der Abfrage beinhaltet.

7. Verfahren gemäß einem der Patentansprüche 4 bis 6,
**dadurch gekennzeichnet, dass**
die Rahmenbedingungen die Gültigkeitsdauer des Tickets oder die maximale Dateigröße betreffen.

8. Verfahren gemäß Patentanspruch 6,
**dadurch gekennzeichnet, dass**
ein erzeugtes Ticket an eine Nutzer-Session gebunden ist.

9. Verfahren gemäß einem der vorherigen Patentansprüche,
**dadurch gekennzeichnet, dass**
das Ticket nach erfolgreicher Datei-Übertragung deaktiviert wird (10).

10. Verfahren gemäß einem der vorherigen Patentansprüche,
**dadurch gekennzeichnet, dass**
die Datei einen Zustand aufweist, anhand dem erkennbar ist, ob die Datei zur Abfrage oder Bearbeitung verfügbar ist oder ob die Abfrage oder Bearbeitung derzeit durchgeführt wird.

11. Verfahren gemäß einem der vorherigen Patentansprüche,
**dadurch gekennzeichnet, dass**
für das Erzeugen und Verwalten der Tickets eine zentrale Instanz (TM) verwendet wird, welche vom Empfänger über File-API und Daten-API erreichbar ist.

12. Verfahren gemäß einem der vorherigen Patentansprüche,
**dadurch gekennzeichnet, dass**
ein erzeugtes Ticket einen einzigartigen Ticket Kenner erhält und
dafür mindestens ein Teil des Ticket Kenners zufällig gewählt wird und
ein Teil des Ticket Kenners Variablen enthält, die es erlauben den Zeitpunkt der Ausstellung und die Reihenfolge der Tickets zu rekonstruieren.

13. Verfahren gemäß einem der vorherigen Patentansprüche,
**dadurch gekennzeichnet, dass**
das Verfahren für eine speicherprogrammierbare Steuerung mit einer web-basierten Datenschnittstelle angewendet wird.

14. Vorrichtung (TM) zur Durchführung eines Verfahrens für die Abfrage oder Bearbeitung einer vollständigen Datei (F) mittels einer Query Language über eine Schnittstelle (API), wobei die Datei in einem Informations-Modell (IM) als Objekt (FP) adressiert ist, die sowohl von Client als auch Empfänger der Datei ansprechbar ist und die
- nach Prüfung auf Ausführbarkeit einer von einem Client eingegangene Anfrage (1) zu einer Datei - ein Ticket erzeugt (4), das Informationen zur Abfrage und zu der Datei enthält, und
- das Ticket mit den Informationen über den anfragenden Client an den geplanten Empfänger der Abfrage übermittelt (5),
- der Empfänger anhand der empfangenen im Ticket enthaltenen Informationen die vollständige Datei laden oder bearbeiten kann (8).

15. Vorrichtung gemäß dem Patentanspruch 14,
**dadurch gekennzeichnet, dass**
das Bearbeiten einer Datei auch das Neuanlegen der Datei umfasst.

16. Vorrichtung gemäß einem der Patentansprüche 14 oder 15,
**dadurch gekennzeichnet, dass**
das Informations-Modell (IM) eine Graphenstruktur aufweist, welche Relationen der Dateien untereinander darstellt.

17. Vorrichtung gemäß einem der vorherigen Patentansprüche 14 bis 16, **dadurch gekennzeichnet, dass**
das Ticket eine Information über Rahmenbedingungen der Abfrage beinhaltet.

18. Vorrichtung gemäß Patentanspruch 17,
**dadurch gekennzeichnet, dass**
die Rahmenbedingungen die Gültigkeitsdauer des Tickets oder die maximale Dateigröße betreffen.

19. Vorrichtung gemäß einem der Patentansprüche 14 bis 18, **dadurch gekennzeichnet, dass**
ein erzeugtes Ticket an eine Nutzer-Session gebunden ist.

20. Vorrichtung gemäß einem der vorherigen Patentansprüche 14 bis 19, **dadurch gekennzeichnet, dass**
das Ticket nach erfolgreicher Datei-Übertragung an den Empfänger von der Vorrichtung (TM) deaktiviert wird.

21. Vorrichtung gemäß einem der vorherigen Patentansprüche 14 bis 20, **dadurch gekennzeichnet, dass**
Das von der Vorrichtung erzeugte Ticket einen einzigartigen Ticket Kenner erhält wobei
dafür mindestens ein Teil des Ticket Kenners zufällig gewählt wird und
ein Teil des Ticket Kenners Variablen enthält, die es erlauben den Zeitpunkt der Ausstellung und die Reihenfolge der Tickets zu rekonstruieren.
